# EUROPÄISCHE PATENTSCHRIFT

(11) **EP 0 784 075 B1**
(45) Veröffentlichungstag und Bekanntmachung des Hinweises auf die Patenterteilung: **09.05.2001**
(21) Anmeldenummer: 96119939.5
(22) Anmeldetag: 12.12.1996
(51) Int. Cl.: C08L 23/16, C08L 15/00, C08K 5/098

(54) **Antriebsriemen**
Power transmission belt
Courroie de transmission de puissance

(30) Priorität: 15.12.1995 DE 19547025
(43) Veröffentlichungstag der Anmeldung: 16.07.1997
(73) Patentinhaber: ContiTech Antriebssysteme GmbH, 30165 Hannover (DE)
(72) Erfinder: Herrmann, Wolfram, Dr., 31515 Wunstorf (DE)
(74) Vertreter: Schneider, Egon

(56) Entgegenhaltungen:
- EP-A- 0 319 320
- EP-A- 0 590 423
- DE-A- 3 918 929
- DE-A- 4 309 893
- US-A- 4 713 409

## Beschreibung

Die Erfindung betrifft einen Antriebsriemen mit im wesentlichen einer elastomeren Decklage, Festigkeitsträgern und einem elastomeren Grundkörper.

An Antriebsriemen werden unterschiedlichste Anforderungen gestellt. So müssen sie z. B. einer hohen dynamischen Beanspruchung standhalten, gute Alterungsbeständigkeit und einen geringen Abrieb aufweisen. Einen entscheidenden Einfluß auf diese Eigenschaften hat die elastomere Matrix (Decklage, Grundkörper) des Antriebsriemens. So sind für den Einsatz in Antriebsriemen Kautschukmaterialien auf Basis von Ethylen-Propylen-Copolymer (EPM)(Ethylen-Propylen-(Dien)-Copolymer (EPDM) und hydrierten Nitrilkautschuk bekannt. In der DE 39 18 929 sind Kautschukmischungen für Gurte, Walzen und Schläuche bekannt, die 10 - 40 Gewichtsprozent Ethylen-Propylen-Copolymerisat-Kautschuk und 90 - 60 Gewichtsprozent hydrierten Nitrilkautschuk enthalten. Diese Kautschukmischungen sind aber für Antriebsriemen, die ein hohe dynamische Tüchtigkeit aufweisen müssen, nicht geeignet. Weiterhin ist in der WO 96/13 544 eine Kautschukmischung für Antriebsriemen offenbart, dessen elastomere Zusammensetzung mindestens aus 50 Gewichtsprozent EPM oder EPDM besteht und 1 bis 30 Gewichtsprozent eines Metallsalzes einer α,β-ungesättigten Carbonsäure als Zusatzstoff enthält. Diese Antriebsriemen haben allerdings den Nachteil, daß sie ein hohes Quellungsverhalten schon bei einem kurzzeitigen Kontakt mit Öl aufweisen. Desweiteren weisen diese Riemen einen erhöhten Abrieb auf.

Die EP 590 423 A2 beschreibt ein Verfahren zur Herstellung von Vulkanisaten, die eine höhere Festigkeit, Elastizität und Ermüdungsbeständigkeit besitzen. Hierfür wird ein Zweistufenverfahren vorgeschlagen, bei dem die Schwefelvulkanisation eines schwefelvulkanisierbaren Kautschuks unter Zuhilfenahme eines Metallsalzes einer ungesättigten Carbonsäure (10 bis 100 phr) und eines Peroxides gesteuert wird.

Weiterhin sind aus der US 4,713,409 allgemein Vulkanisate bekannt, die verbesserte Eigenschaften hinsichtlich Festigkeit und Modul aufweisen.

In der EP 319 320 A1 werden u. a. Zahnriemen mit verbesserter Hitze- und Ölbeständigkeit sowie verbessertem Modul beschrieben, deren Elastomermischungen 100 phr H-NBR und ein Metallsalz einer ungesättigten Carbonsäure enthalten.

Der Erfindung liegt die Aufgabe zugrunde, Antriebsriemen bereitzustellen, die eine hohe Leistungsübertragung ermöglichen.

Gelöst wird diese Aufgabe erfindungsgemäß dadurch, daß die Decklage und/oder der Grundkörper aus einer peroxydisch vernetzten Elastomermischung besteht, die bezogen auf 100 Teile Kautschuk 41 - 99 Teile Ethylen-Propylen-Dien-Copolymerisat (EPDM) und/oder Ethylen-Propylen-Copolymerisat (EPM) sowie 59 - 1 Teile hydrierten Nitrilkautschuk (H-NBR)enthält und weitere Bestandteile wie Weichmacher und Füllstoffe aufweist, und daß die Elastomermischung zumindest ein Metallsalz eines α, β -ungesättigten Carbonsäurederivates in einer Menge von 81 bis 100 Teile enthält.

Das für die Herstellung des erfindungsgemäßen Antriebsriemen verwendete Ethylen-Propylen-Copolymerisat weist einen Ethylen-Anteil von 30 - 80 Gewichtsprozent auf. Bei Einsatz eines Ethylen-Propylen-Dien-Copolymerisates soll der Ethylen-Gehalt zwischen 30 - 80 Gewichtsprozent, bevorzugt zwischen 50 und 60 Gewichtsprozent betragen. Der Dien-Anteil soll bei < 10 Gewichtsprozent bevorzugt 5 - 7 Gewichtsprozent liegen. Als Dien werden nichtkonjugierte Verbindungen wie z. B. 1,4-Hexadien, Dicyclopentadien, Ethylidennorbonen, Methylennorbornen oder Methyltetrahydroinden verwendet. Dabei ist es unerheblich nach welchem Herstellungsverfahren das EPDM bzw. EPM hergestellt wurde.

Als bevorzugt soll EPDM eingesetzt werden, da dieser Kautschuk im Vergleich zu EPM geringere Mengen an Peroxid zur Vernetzung benötigt und damit im Antriebsriemen höhere Festigkeiten und auch ein geringerer Abrieb erzielt werden. Als H-NBR-Kautschuke sollen die aus dem Stand der Technik bekannten zum Einsatz kommen. Dabei soll der Restdoppelbindungsanteil zwischen 0 und 30 %, bevorzugt zwischen 0 und 15 % liegen. Der Vorteil eines geringeren Restdoppelbindungsanteils (0 bis 15 %) ist eine bessere Alterungsbeständigkeit. Der Acrylnitrilgehalt im H-NBR soll höchstens 50 Gewichtsprozent betragen, wobei niedrigere Acrylnitrilanteile eine bessere Dynamik des Riemens mit sich bringen.

Es sollen Metallsalze (z. B. des Aluminiums, Magnesiums, Kalziums, Zinks) von α, β-ungesättigten Carbonsäurederivaten wie z. B. Diacrylsäure , Dimethacrylsäure, Acrylsäure zum Einsatz kommen. Der Anteil dieses Metallsalzes (81 - 100 Teile) hat sich vorteilhaft erwiesen. Die Antriebsriemen besitzen aufgrund der hohen Metallsalzkonzentration eine hohe Härte, die ein hervorragendes Kraftübertragungsvermögen des Riemens bewirken. Außerdem wirkt sich diese Metallsalzmenge positiv auf die Haftung zu den Festigkeitsträgern (Zugstränge, Gewebe) aus und dem Antriebsriemen wird ein geringerer Abrieb verliehen. Besonders gut werden diese Eigenschaften vom Zinksalz von Acrylsäurederivaten beeinflußt. Bevorzugt kommen Zinkdiacrylat und/oder Zinkdimethacrylat zum Einsatz.

Als Peroxide werden aus dem Stand der Technik übliche Substanzen wie z. B. Dicumylperoxid in bekannten Konzentrationen (1 - 10 Teile) verwendet.

Auch können weitere Bestandteile wie Stabilisatoren, Farbstoffe und Vernetzungshilfsmittel in erfindungsgemäßen Mischungen für Antriebsriemen enthalten sein.

Durch die Kombination von 41 - 99 Teile EPDM und/oder EPM und 59 - 1 Teile hydrierten Nitrilkautschuk sowie 81 - 100 Teile eines Metatallsalzes eines α/β ungesättigten Carbonsäurederivates werden erfindungsgemäß Antriebsriemen erzielt, die eine hervorragende dynamische Tüchtigkeit mit sich bringen. Weiterhin zeigen diese Riemen eine unerwartet gute Kälteflexibilität bis - 40°C, obwohl eigentlich eine Unterschreitung einer der beiden Glastemperaturen (EPDM: - 38°C, H-NBR: - 22°C) zur Versprödung des Riemens und damit zum Ausfall führt. Es konnte auch festgestellt werden, daß das Ölquellverhalten mit zunehmendem H-NBR-Gehalt positiv beeinflußt wurde. Dieser Effekt war aufgrund Anwesenheit zweier verschiedener Polymerphasen nicht zu erwarten. Aber auch wenn die erfindungsgemäßen Antriebsriemen ein etwas ungünstigeres Ölquellverhalten aufweisen, bleibt bei kurzzeitiger Öleinwirkung ihre Strukturfestigkeit erhalten.

Weiterhin ist vorteilhaft, wenn als Weichmacher polare Weichmacher eingesetzt werden, da diese eine bessere Haftung zum Festigkeitsträger aufweisen und damit eine höhere Lebensdauer des Antriebsriemens bewirken. Der positive Einfluß des polaren Weichmachers (z. B. Esterweichmacher) auf die Eigenschaften des Antriebsriemens waren nicht zu erwarten, da EPDM und auch H-NBR eher zu den unpolaren Polymeren zählen. Vorteilhaft sind Weichmachermengen von 0 - 30 Teilen in Verbindung mit einem Gesamtfüllstoffanteil (Summe aller Füllstoffe, also z. B. Ruß und weiße Füllstoffe) von 0 - 60 Teilen. Diese Kombination hat sich bewährt, da die Antriebsriemen einen geringeren Abrieb und gleichzeitig eine gute Dynamik aufweisen. Als weiße Füllstoffe können z. B. Silikate, Oxide oder Salze von Metallen (Aluminium, Magnesium, Kalzium) verwendet werden.

Von besonderem Vorteil ist, wenn die Decklage und/oder der Grundkörper anorganische und/oder organische Kurzfasern enthält. Darunter können sämtliche natürliche oder synthetische Materialien gefaßt werden, wie z. B. Polyester, Aramid, Viskose, Zellulose oder Glas. Insbesondere ein Länge von 1 - 6 mm wirkt sich positiv auf die mechanischen Eigenschaften (höhere Festigkeit) des Antriebsriemens aus. Die Menge an eingemischten Kurzfasern soll vorzugsweise 1 - 10 Teile betragen.

Der Antriebsriemen, der die erfindungsgemäße Gummimischung aufweist, kann z. B. ein Keilrippenriemen, ein Zahnriemen oder auch ein Keilriemen sein. Insbesondere für Zahnriemen, die ein besonders gutes Kraftübertragungsvermögen aufweisen müssen, hat sich diese erfindungsgemäße Gummimischung bewährt.

Im folgenden wird ein Ausführungsbeispiel näher erläutert:

In Tabelle 1 ist eine erfindungsgemäße Kautschukmischung für Zahnriemen angegeben.

**Tabelle 1**

| Bestandteil: | Zusammensetzung (Gewichtsteile) |
|---|---|
| | |
| EPDM | 95 |
| H-NBR | 5 |
| Zinkdiacrylat | 83 |
| Ruß N 550 | 5 |
| Dicumylperoxid | 4,5 |
| weiße Füllstoffe (ZnO) | 1,8 |
| Fasern (Aramid) | 2,5 |
| Coaktivater (TRIM) | 1,5 |
| pol. Weichmacher (TOTM) | 15 |
| | |

| Eigenschaften | |
|---|---|
| | |
| Härte Shore A | 84 |
| Zugfestigkeit in Faserrichtung [N/mm²] | 13,3 |
| Reißdehnung [%] | 320 |
| 50 % Modul | 5,6 |
| Glastemperatur (T_{G} in °C) | - 43 |
| Abrieb auf Motor 24h [%] | < 1 |
| Riemenlauf bei - 40°C | o.k. |
| Volumenzunahme bei Ölkontakt 24h 100°C [Vol-%] | 65 |

Das erfindungsgemäße Material verleiht dem Antriebsriemen eine hervorragende Kälteflexibilität, ohne der Zugabe von bisher üblichen Hilfsmitteln (spezielle Weichmacher). Da sich diese Mischung durch einen hohen Modul auszeichnet, ist eine große Kraftübertragung des mit diesem Material hergestellten Riemens möglich. Des weiteren war ein geringer Abrieb zu verzeichnen. Die Riemen können demnach für ein großes Anwendungsspektrum eingesetzt werden.

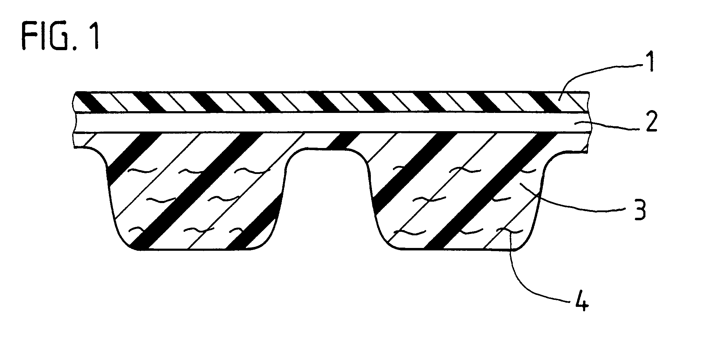

Des weiteren soll anhand einer schematischen Zeichnung die Erfindung näher erläutert werden. Es zeigt Fig. 1 einen Zahnriemen im Längsschnitt. Der Zahnriemen weist eine Decklage 1 aus elastomerem Material, Festigkeitsträger 2 und einen elastomeren Grundkörper 3 auf. Prinzipiell kann auch ein nicht dargestelltes Ummantelungsgewebe vorhanden sein.

Die elastomere Matrix der Fig. 1 (Decklage 1 und Grundkörper 3) besteht aus der Kautschukmischung, die in der Tabelle 1 angegeben ist. Prinzipiell ist es aber auch möglich, daß die Decklage 1 oder der Grundkörper 3 aus der erfindungsgemäßen Mischung besteht. Die Festigkeitsträger 2 sind aus Glas. Der Grundkörper 3 der Figur 1 enthält Kurzfasern 4 aus z. B. Aramid mit einer Länge von ca. 4 mm. Diese Kurzfasern verleihen dem Riemen eine höhere Festigkeit, einen geringeren Abrieb und außerdem ein verbessertes Geräuschverhalten.

## Patentansprüche

1. Antriebsriemen mit im wesentlichen einer elastomeren Decklage, Festigkeitsträgern und einem elastomeren Grundkörper,
**dadurch gekennzeichnet**,
daß die Decklage und/oder der Grundkörper aus einer peroxydisch vernetzten Elastomermischung besteht, die bezogen auf 100 Teile Kautschuk 41 - 99 Teile Ethylen-Propylen-Dien-Copolymerisat (EPDM) und/oder Ethylen-Propylen-Copolymerisat (EPM) sowie 59 - 1 Teile hydrierten Nitrilkautschuk (H-NBR) enthält und weitere Bestandteile, wie Weichmacher und Füllstoffe aufweist, und daß die Elastomermischung zumindest ein Metallsalz eines α, β-ungesättigten Carbonsäurederivates in einer Menge von 81 bis 100 Teile enthält.

2. Antriebsriemen nach Anspruch 1, dadurch gekennzeichnet, daß das Metallsalz des α, β- ungesättigten Carbonsäurederivates das Zinksalz eines Acrylsäurederivates ist.

3. Antriebsriemen nach Anspruch 1, dadurch gekennzeichnet, daß die Elastomermischung einen polaren Weichmacher aufweist.

4. Antriebsriemen nach Anspruch 2, dadurch gekennzeichnet, daß der Anteil des polaren Weichmachers zwischen 0 und 30 Teilen und der Anteil der gesamten Füllstoffe zwischen 0 und 60 Teilen liegt.

5. Antriebsriemen nach zumindest einem der vorhergehenden Ansprüche, dadurch gekennzeichnet, daß die Decklage und/oder der Grundkörper anorganische und/oder organische Kurzfasern mit einer Länge von 1 bis 6 mm enthält.

6. Antriebsriemen nach Anspruch 5, dadurch gekennzeichnet, daß der Anteil der Kurzfasern 1 bis 10 Teile beträgt.

7. Zahnriemen nach zumindest einem der Ansprüche 1 bis 6.

## Claims

1. Driving belt, having substantially one elastomeric cover ply, reinforcing members and an elastomeric basic body member, characterised in that the cover ply and/or the basic body member comprise or comprises a peroxidically cross-linked elastomer mixture, which contains, relative to 100 parts rubber, 41 - 99 parts ethylenepropylene-diene copolymer (EPDM) and/or ethylene-propylene copolymer (EPM) as well as 59 - 1 parts hydrated nitrile rubber (H-NBR) and has additional constituent ingredients, such as plasticizers and filler substances, and in that the elastomer mixture contains at least one metallic salt of an α, β-unsaturated carboxylic acid derivative in a quantity of between 81 and 100 parts.

2. Driving belt according to claim 1, characterised in that the metallic salt of the α, β-unsaturated carboxylic acid derivative is the zinc salt of an acrylic acid derivative.

3. Driving belt according to claim 1, characterised in that the elastomer mixture has a polar plasticizer.

4. Driving belt according to claim 2, characterised in that the proportion of the polar plasticizer is between 0 and 30 parts, and the proportion of the total filler substances is between 0 and 60 parts.

5. Driving belt according to at least one of the preceding claims, characterised in that the cover ply and/or the basic body member contain or contains inorganic and/or organic short fibres having a length of between 1 and 6 mm.

6. Driving belt according to claim 5, characterised in that the proportion of the short fibres is between 1 and 10 parts.

7. Driving belt according to at least one of claims 1 to 6.

## Revendications

1. Courroie d'entraînement comportant essentiellement une couche de revêtement élastomère, des éléments de renfort et un corps de base élastomère,
caractérisée en ce
que la couche de revêtement et/ou le corps de base est formé par un mélange élastomère réticulé par peroxydation, qui comporte, d'une manière rapportée à 100 parties de caoutchouc, 41-99 parties d'un copolymère éthylène-propylène-diène (EPDM) et/ou d'un copolymère éthylène-propylène (EPM), ainsi que 59-1 parties de caoutchouc nitrile hydruré (H-NBR), et d'autres constituants tels qu'un plastifiant et des substances de remplissage, et que le mélange élastomère contient au moins un sel métallique d'un dérivé d'acide carbonique non saturé en *α, β* en une quantité de 80 à 100 parties.

2. Courroie d'entraînement selon la revendication 1, caractérisée en ce que le sel métallique du dérivé d'acide carbonique non saturé en α, β est le sel de zinc d'un dérivé d'acide acrylique.

3. Courroie d'entraînement selon la revendication 1, caractérisée en ce que le mélange élastomère comporte un plastifiant polaire.

4. Courroie d'entraînement selon la revendication 2, caractérisée en ce que la composante formée par le plastifiant polaire est comprise entre 0 et 30 parties, et la composante de l'ensemble des substances de remplissage est comprise entre 0 et 60 parties.

5. Courroie d'entraînement selon au moins l'une des revendications précédentes, caractérisée en ce que la couche de revêtement et/ou le corps de base contiennent des fibres courtes minérales et/ou organiques d'une longueur de 1 à 6 mm.

6. Courroie d'entraînement selon la revendication 5, caractérisée en ce que la composante formée par les fibres courtes est comprise entre 1 et 10 parties.

7. Courroie dentée selon au moins l'une des revendications 1 à 6.
